# EUROPÄISCHE PATENTANMELDUNG

(11) **EP 3 301 317 A1**
(43) Veröffentlichungstag der Anmeldung: **04.04.2018**
(21) Anmeldenummer: 17194011.7
(22) Anmeldetag: 29.09.2017
(51) Int. Cl.: F16C 35/077, F16C 35/067

(54) **RADLAGEREINHEIT UND RADTRÄGER**

(30) Priorität: 30.09.2016 DE 102016219085; 15.12.2016 DE 102016225155
(71) Anmelder: Hirschvogel Umformtechnik GmbH, 86920 Denklingen (DE)
(72) Erfinder: Wörner, Harro, 87600 Kaufbeuren (DE); Ihle, Armin, 86925 Fuchstal (DE); Triesch, Gordon, 86916 Kaufering (DE); Frick, Claudia, 86899 Landsberg a. Lech (DE); Fabian, Hierstetter, 92224 Amberg (DE); Pischel, Walter, 86916 Kaufering (DE); Bair, Simon, 86977 Burgen (DE)
(74) Vertreter: Kiwit, Benedikt

(57) **Zusammenfassung**

Die vorliegende Erfindung betriff eine Radlagereinheit aufweisend einen Radflansch, und ein sich vom Radflansch weg erstreckendes Radlager mit einer Rotationsachse (A) sowie mit einem Radlagerinnenring, einem den Radlagerinnenring außen umfangsseitig umgebenden Radlageraußenring (4), und zwischen dem Radlagerinnenring und dem Radlageraußenring (4) angeordnete Wälzkörper, wobei der Radlageraußenring (4) oder der Radlagerinnenring auf seiner Außenseite (40) umfangsseitig eine Verbindungsstruktur (6) zum Verbinden der Radlagereinheit mit einem Radträger durch relative Drehbewegung bezüglich der Rotationsachse (A) aufweist. Ferner betrifft die Erfindung einen Radträger, aufweisend eine Aufnahmestruktur zum bevorzugt kraftschlüssigen Verbinden einer Radlagereinheit, vorzugsweise einer Radlagereinheit gemäß der vorliegenden Erfindung, mit dem Radträger durch relative Drehbewegung bezüglich der Rotationsachse (A) der Radlagereinheit. Die Erfindung betrifft ferner eine Radlageranordnung sowie ein Fahrzeug mit dieser Radlageranordnung.

## Beschreibung

Die vorliegende Erfindung betrifft eine Radlagereinheit, einen Radträger, eine diese Radlagereinheit bzw. diesen Radträger aufweisende Radlageranordnung sowie ein mit der Radlageranordnung ausgestattetes Fahrzeug.

Aus dem Stand der Technik sind grundsätzlich Radlagereinheiten bekannt. Die bekannten Radlagereinheiten weisen in der Regel einen Radflansch auf, von dem sich ein Radlager seitlich weg erstreckt. Das Radlager weist eine Rotationsachse auf. In der Regel weist das Radlager einen Innenring und einen den Innenring außen umgebenden Außenring auf, zwischen denen Wälzkörper - bevorzugt in zwei oder mehr axial benachbarten Wälzkörpergruppen - angeordnet sind. Zur Befestigung der Radlager- bzw. Radnabeneinheit mit dem Fahrzeug, insbesondere mit einem radführenden Teil wie einem Radträger (beispielsweise Achsschenkel), weist der Außenring über den Umfang gleichmäßig verteilte radial vorstehende Anschraubflansche auf, welche an entsprechend verstärkten Anschraubpunkten am Radträger bzw. Achsschenkel mittels zusätzlicher Befestigungsmittel (bspw. Schrauben) befestigt werden. Radlager und Radflansch sind in der Regel über eine Radnabe verbunden, die bevorzugt integral mit dem Radflansch und weiter bevorzugt auch integral mit dem Innenring verbunden bzw. durch diese ausgebildet ist. Sind der (die) Anschraubflansch(e) sowie der Radflansch integral mit dem Radlager ausgebildet, spricht man auch von einem Radlager der 3. Generation (im Folgenden auch als GEN3 bezeichnet). Ist lediglich der drehende Radflansch zur Aufnahme von Bremsscheibe und Felge integral mit dem Radlager ausgebildet, spricht man auch von einem Radlager der 2. Generation (im Folgenden auch als GEN2 bezeichnet). Ist keiner der bezeichneten Flansche integral mit dem Radlager ausgebildet, so spricht man auch von einem Radlager der 1. Generation (im Folgenden auch als GEN1 bezeichnet).

Es ist nunmehr eine Aufgabe der vorliegenden Erfindung, insbesondere im Hinblick auf Montage und Gewicht eine verbesserte Radlagereinheit und einen verbesserten Radträger bereitzustellen.

Diese Aufgabe wird durch den Gegenstand der unabhängigen Ansprüche gelöst. Die abhängigen Ansprüche bilden den zentralen Gedanken der vorliegenden Erfindung in besonders vorteilhafter Weise weiter.

Gemäß einem ersten Aspekt betrifft die vorliegende Erfindung eine Radlagereinheit mit einem Radflansch und ein sich vom Radflansch (axial) weg erstreckendes Radlager. Das Radlager weist eine Rotationsachse auf, entlang derer es sich erstreckt. Ferner weist das Radlager einen Radlagerinnenring und einen den Radlagerinnenring außen umfangseitig umgebenden Radlageraußenring auf, wobei zwischen dem Radlagerinnenring und dem Radlageraußenring Wälzkörper (bevorzugt in wenigstens zwei axial benachbarten Wälzkörpergruppen) angeordnet sind. Einer von Radlageraußenring bzw. Radlagerinnenring ist bevorzugt mit dem Radflansch verbunden (GEN1, GEN2, GEN3) und weiter bevorzugt integral mit diesem ausgebildet (GEN2, GEN3); diese bilden dann bevorzugt eine Radnabe bzw. Radnabeneinheit. Die Radlagereinheit, also insbesondere der Radlageraußenring oder der Radlagerinnenring (im Folgenden auch als "Radlagerring" bezeichnet), weist eine Verbindungsstruktur zum (kraftschlüssigen und/oder formschlüssigen) Verbinden der Radlagereinheit mit einem Radträger durch relative Drehbewegung bezüglich der Rotationsachse auf. Dies betrifft insbesondere den mit dem Radflansch nicht verbundenen Teil von Radlageraußenring und Radlagerinnenring. Unter "relative Drehbewegung bezüglich der Rotationsachse" ist dabei zu verstehen, dass die Verbindungsstruktur derart ausgebildet ist, dass die Radlagereinheit mit einem Radträger verbunden werden kann, indem die Verbindungsstruktur bzw. eine damit korrespondierende Aufnahmestruktur quasi zentral um die Rotationsachse herum gedreht - bspw. geschraubt - wird. Durch die so bereitgestellte kraftschlüssige Verbindung der Verbindungsstruktur mit einem Verbindungselement (bspw. Radträger selbst oder separates Aufnahmeteil) kann eine bevorzugt kraftschlüssige und/oder formschlüssige Verbindung zwischen Radlagereinheit und Radträger bereitgestellt werden.

Die Verbindungsstruktur ist dabei auf der Außenseite von Radlageraußenring bzw. Radlagerinnenring umfangsseitig vorgesehen. Hierzu weist beispielsweise der Radlageraußenring auf der von dem Radlagerinnenring abgewandten Außenseite umfangsseitig - bevorzugt geschlossen umfangsseitig - die Verbindungsstruktur zum (kraftschlüssigen) Verbinden der Radlagereinheit mit einem Verbindungselement durch Drehbewegung bezüglich der Rotationsachse auf. Alternativ kann beispielsweise auch der Radlagerinnenring bevorzugt an seinem dem Radflansch abgewandten und ferner bevorzugt dem Radlageraußenring zugewandten Außenumfang (geschlossen) umfangsseitig die Verbindungsstruktur aufweisen; dies bevorzugt axial außerhalb der Wälzkörperlaufflächen des Radlagers. Die Verbindungsstruktur kann dabei ein Gewinde aufweisen (als eine Form einer umlaufend geschlossenen bzw. geschlossen umfangsseitigen Verbindungsstruktur). Auch andere Verbindungsstrukturen sind denkbar, wie beispielsweise ein Teil einer Bajonettverbindung, insbesondere eine Bajonettausnehmung, wie eine Bajonettnut oder ein Bajonettschlitz, oder ein Bajonettvorsprung. Die den Teil der Bajonettverbindung bildende Verbindungsstruktur liegt dabei bevorzugt über den Umfang des Radlageraußenrings bzw. Radlagerinnenrings (gleichmäßig oder ungleichmäßig) verteilt angeordnet vor.

Mittels einer derart bereitgestellten Verbindungsstruktur wird eine besonders einfache Montagemöglichkeit für die Radlagereinheit geschaffen, indem die Radlagereinheit (beispielsweise der Radlageraußenring bzw. Radlagerinnenring) in einfacher Weise durch relative Dreh- bzw. Schraubbewegung des die Verbindungsstruktur aufweisenden Bauteils selbst befestigt werden kann. Die Radlagereinheit kann somit direkt und ohne weitere Befestigungsmittel (wie sie bspw. bei GEN2 oder GEN3 bekannt sind) beispielsweise mit einem Radträger verbunden werden. Auch ist es denkbar, dass die Verbindungsstruktur nicht direkt in das diese aufnehmende Bauteil eingedreht wird, sondern ein zusätzliches Verbindungselement bereitgestellt wird, welches sich entsprechend auf die Verbindungsstruktur drehen (schrauben) lässt, um somit eine (kraft und/oder formschlüssige) Verbindung der Radlagereinheit bspw. mit einem Radträger zu erzielen. Durch ein definiert festgelegtes Anzugsdrehmoment beim Einschrauben bzw. Eindrehen kann es dabei ermöglicht werden, das Radlager entsprechend zu sichern und vorzuspannen. Da die Radlagereinheit nicht auf Antriebsdrehmoment beansprucht wird, ist auch ein grobes Gewinde denkbar, welches wiederum das ,Einfädeln' bei der Montage der Radlagereinheit erleichtert. Beispielsweise kommt hier ein Trapezgewinde in Betracht, welches leicht fügbar ist. Neben der vereinfachten Montage kann zudem auf die Anschraubflansche am Außenring bekannter Radlagereinheiten der GEN2 oder GEN3 sowie die zur Befestigung mit dem Radträger notwendigen zahlreichen separaten Befestigungsmittel (Schrauben; Muttern) verzichtet werden, so dass die Radlagereinheit insgesamt deutlich gewichtsreduziert ausgebildet werden kann. Besonders bevorzugt ist hierbei die (zentrale) Drehbewegung um die Rotationsachse herum, so dass die Anzahl zusätzlicher Befestigungsmittel erheblich reduziert oder sogar vermieden werden kann. Auch das durch die bisherigen Befestigungsmittel hervorgerufene "Radlagerknacken" kann durch die neue Befestigungsweise (vorzugsweise direkt über die Radlagereinheit) behoben werden. Durch den Wegfall von Material und zusätzlichen Bauteilen können somit insgesamt die Kosten zur Herstellung und Montage der Radlagereinheit reduziert werden.

Die Verbindungsstruktur kann einerseits integral mit der Radlagereinheit (also bspw. dem Radlageraußenring bzw. dem Radlagerinnenring) ausgebildet sein. Beispielsweise ist es denkbar, dass in den Radlageraußenring bzw. Radlagerinnenring außen ein Gewinde eingeschnitten ist. Bei einer Bajonettverbindung können die entsprechenden Bajonettverbindungs-Strukturpartner, sofern es sich um vorspringende Elemente - wie beispielsweise einen Bajonettvorsprung - handelt, mit dem Radlageraußenring bzw. Radlagerinnenring zusammen hergestellt werden. Handelt es sich beispielsweise um eine Bajonettausnehmung, wie eine Bajonettnut oder einen Bajonettschlitz, so können diese Verbindungsstrukturpartner auch nachträglich mittels spanender Fertigungsverfahren eingebracht werden.

Alternativ oder zusätzlich zur integralen Ausbildung ist es auch denkbar, die Verbindungsstruktur (wenigstens teilweise) mittels eines separaten Verbindungsteils, insbesondere auf der Außenseite des (Rad-)Lageraußenringes bzw. des (Rad-)Lagerinnenrings, bereitzustellen, wie dies vergleichbar von der GEN1 oder GEN2 bekannt ist. Beispielsweise kann die Verbindungsstruktur als Hülse mit außenumfangsseitiger Verbindungsstruktur bereitgestellt sein. Das separate Verbindungsteil kann dann auf den (Rad-)Lageraußenring bzw. (Rad-)Lagerinnenring mittels Formschluss (bspw. radialer Vorsprung, wie im Folgenden beschrieben), Kraftschluss (bspw. über Gewinde) und/oder Stoffschluss (bspw. Schweißung) vorgesehen sein. Diese Variante mit separatem Verbindungsteil hat den Vorteil, dass die Verbindungsstruktur unabhängig von der Radlagereinheit gezielt und den Anforderungen entsprechend ausgebildet und bereitgestellt werden kann. Auch können auf diese Weise Radlagereinheiten mit beliebigen Verbindungsstrukturen unterschiedlicher Art versehen werden, um beispielsweise unterschiedliche Verbindungsarten bereitstellen zu können. Ebenso können die Materialien entsprechend gewählt werden, welche für den gegebenen Zweck bevorzugt sind. Zudem kann mittels radialem Vorsprung (bspw. eine (umlaufende) radiale Schulter) dieses separaten Verbindungsteils ein Anschlag und somit eine axiale Fixierung/Sicherung für den zugehörigen Radlageraußenring bzw. Radlagerinnenring bereitgestellt werden. Insbesondere kann durch einen derart bereitgestellten radialen Vorsprung die axiale Vorspannung des Radlagers über das Verbindungsteil eingestellt werden. Der jeweils andere von (Rad-)Lageraußenring bzw. (Rad-)Lagerinnenring ist dazu bevorzugt entsprechend gekontert; beispielsweise mittels eines axialen Anschlages wie einer zentral aufgeschraubten Kontermutter als Radlagerverspannmittel, welche(s) bzgl. des radialen Vorsprungs an dem der Radlagereinheit axial gegenüberliegenden Ende vorgesehen ist. Je nach Größe des Radlagers ist es hierbei denkbar, dass sich das separate Verbindungsteil ganz oder nur über einen Teil des Radlagers axial erstreckt, um die Funktion zur axialen Fixierung/Sicherung zu ermöglichen. Die restliche axiale Erstreckung wird dann beispielsweise durch einen radialen Vorsprung des entsprechenden Radlagerringes bereitgestellt. Auch kann das Verbindungsteil ein Teil eines mehrteiligen (bspw. zweiteiligen) Ringelementes (des entsprechenden Radlagerringes) sein, wobei einer der bevorzugt axial aneinandergereihten bzw. zusammengesetzten Ringelementteile das Verbindungsteil bildet. Der andere Teil bildet dann beispielsweise einfach einen radialen Stützring zur radialen Abstützung des Radlagers.

Der entsprechende Radlagerring (Radlageraußenring bzw. Radlagerinnenring) weist bevorzugt zwischen der Verbindungsstruktur und dem Radflansch einen umfangsseitigen und vorzugsweise mit dem Radlagerring (Radlageraußenring bzw. Radlagerinnenring) integral ausgebildeten (radialen bzw. radial vorstehenden) Anlagevorsprung auf. Der Anlagevorsprung weist ferner bevorzugt eine der Verbindungsstruktur zugewandte Planfläche auf. Mittels dieses Anlagevorsprunges kann beispielsweise ein axialer Anschlag beim Verbinden der Radlagereinheit mit einem Radträger bereitgestellt werden. Ein solcher Anlagevorsprung bzw. eine solche Schulter ist dann vorteilhaft, wenn er/sie über die Verbindungsstruktur mit einem separaten Verbindungselement (bspw. Gewindering bzw. Mutter) gekontert ist; also bspw. auf einer bzgl. des Anlagevorsprunges gegenüberliegenden Seite eines Radträgers durch relative Drehbewegung von Verbindungselement und die Verbindungsstruktur aufweisendem Radlagerring mit dem Radträger verbunden, nämlich diesen einspannend vorgesehen ist. Es ist jedoch auch denkbar, dass kein separates Verbindungselement vorgesehen und die Verbindungsstruktur lediglich auf dem Radlagerring bereitgestellt ist. Gekontert wird das Radlager dann bevorzugt durch korrespondierende Bauteile, wie bspw. den Radträger.

Der Radlageraußenring bzw. Radlagerinnenring kann ferner eine im Wesentlichen zylindrische Außenkontur aufweisen. Dies wenigstens im die Verbindungsstruktur aufweisenden Bereich. Somit kann die geometrische Form der Radlagereinheit insgesamt und somit deren Herstellung vereinfacht werden. Alternativ ist jedoch insbesondere auch eine sich axial verjüngende konische Außenkontur denkbar, welche mit einem separaten Verbindungselement, wie zuvor ähnlich beschrieben, gekontert ist. Die Aufnahmestruktur weist dann bevorzugt eine vergleichbare (insbesondere konische) Außenkontur auf. Über das Verbindungselement kann sodann eine Vorspannung des Radlagers über die konische Kontur erzielt werden. Alternativ zu der Variante mit Kontermutter als Verbindungselement ist es auch denkbar, ein separates Verbindungsteil mit radialer Verbindungsstruktur axial auf der aufgeweiteten Seite der konischen Kontur vorzusehen, um über seine Verbindungsstruktur in axiale Anlage mit dem entsprechenden (Rad-)Lagerring gebracht zu werden. Der entsprechend andere (Rad-) Lagerring ist dann bevorzugt gekontert; bspw. mit einer bzgl. des Radlagers dem Verbindungsteil axial gegenüberliegenden Kontermutter. Auf diese Weise kann das (die) Radlager(einheit) in einfacher Weise beliebig verspannt werden. Diese Ausführungsform kann des Weiteren in vergleichbarer Weise einen Anlagevorsprung und wahlweise ferner ein entsprechendes Verbindungselement aufweisen.

Die Radlagereinheit, insbesondere der Radlageraußenring bzw. Radlagerinnenring, kann Außenkonturbereiche zur Aufnahme eines Werkzeugs zur Erzeugung einer relativen Drehbewegung des Radlageraußenringes bzw. Radlagerinnenringes (also des die Verbindungsstruktur aufweisenden Radlagerringes) aufweisen, um die (kraftschlüssige) Verbindung der Radlagereinheit (bspw. mit einem Radträger oder einem separaten Aufnahmeteil) herstellen zu können. Dabei sind die Außenkonturbereiche bevorzugt zwischen der Verbindungsstruktur und dem Radflansch, weiter bevorzugt in dem Anlagevorsprung, bereitgestellt. Beispielsweise kann eine Nut als Außenkonturbereich bereitgestellt sein, mittels der ein Hakenschlüssel aufgenommen werden kann. Mittels dieses Hakenschlüssels kann dann der Radlageraußenring bzw. Radlagerinnenring der Radlagereinheit zur Erzeugung der (kraftschlüssigen) Verbindung beispielsweise mit einem Radträger entsprechend gedreht - beispielsweise eingeschraubt - oder gegenüber einer relativen Drehung eines (separaten) Verbindungselements festgehalten werden. Auch ist es denkbar, dass die Außenkonturbereiche alternativ oder zusätzlich zu den vorbezeichneten formschlüssigen Befestigungsmöglichkeiten reibschlüssige Befestigungsmöglichkeiten bereitstellen. Beispielsweise über einen Rändel, welcher an einem entsprechenden Bereich der Radlagereinheit vorgesehen ist, um eine relative Drehbewegung auf den entsprechenden Radlagerring bei der Montage übertragen zu können.

Eine äußere Lagerlauffläche (für die Wälzkörper) kann auf der radialen Innenseite des Radlageraußenrings bereitgestellt sein. Diese kann bevorzugt integral (GEN3) oder mittels eines in dem Radlageraußenring innen umfangseitig vorgesehenen Lageraußenringes (GEN1, GEN2) bereitgestellt sein. In gleicher Weise kann eine innere Lagerlauffläche (für die Wälzkörper) auf der radialen Außenseite des Radlagerinnenrings bereitgestellt sein, vorzugsweise integral oder mittels eines auf dem Radlagerinnenring außen umfangseitig vorgesehenen Lagerinnenringes (wahlweise entsprechend GEN1, GEN2, GEN3). Während bei der integralen Ausgestaltung der Lagerlaufflächen (gemäß GEN2 bzw. GEN3) auf zusätzliche Bauteile verzichtet werden kann, kann mittels der Bereitstellung separater Lageraußenringe bzw. Lagerinnenringe (gemäß GEN1 bzw. GEN2) das Lager definiert auf die gegebenen Anforderungen optimal ausgelegt werden. Das vorbezeichnete Verbindungsteil bildet dann - zusammen mit dem jeweiligen Lagerring - bevorzugt den anderen radialen Teil des jeweiligen Radlagerringes. Wenigstens einer von Radlagerinnenring und Radlageraußenring kann axial mehrteilig aufgebaut sein. Jeweils ein Teil ist dabei bevorzugt einer Wälzkörpergruppe zugeordnet. Besonders bevorzugt ist wenigstens ein axial verspannbarer Teil von Radlagerinnenring und Radlageraußenring mehrteilig aufgebaut; beispielsweise in der Variante mit radialem Vorsprung des Verbindungsteils, wobei über den radialen Vorsprung die Vorspannung des Radlagers eingestellt werden kann. Hilfsweise kann bei dieser Variante ein Verbindungselement in vorbeschriebener Weise bereitgestellt werden, über den das Radlager axial eingespannt und verspannt werden kann. Das Verbindungselement kann dabei wahlweise lediglich der Verspannung des Radlagers oder wahlweise zusätzlich oder alternativ - bspw. in Zusammenwirkung mit dem Anlagevorsprung - der Verbindung von Radlagereinheit mit Radträger dienen.

Gemäß einem weiteren Aspekt betrifft die vorliegende Erfindung ferner einen Radträger. Dieser weist eine zuvor bereits erwähnte Aufnahmestruktur zum bevorzugt kraftschlüssigen Verbinden einer Radlagereinheit, vorzugsweise einer erfindungsgemäßen Radlagereinheit, mit dem Radträger durch relative Drehbewegung bezüglich der Rotationsachse des Radlagers bzw. der Radlagereinheit auf. Die Aufnahmestruktur ist dabei bevorzugt in einer Öffnung (bspw. einer Durchgangsöffnung oder eines Sacklochs) des Radträgers umfangsseitig ausgebildet; insbesondere an der die Öffnung bildenden bzw. begrenzenden Innenseite. Es ist jedoch grundsätzlich auch denkbar, dass die Verbindungsstruktur mit einem die Aufnahmestruktur aufweisenden - und ebenfalls zuvor bereits erwähnten - Verbindungselement (bspw. einem Gewindering wie z.B. eine (Befestigungs-)Mutter) durch relative Drehbewegung mit dem Radträger verbindbar ist, indem der Radträger zwischen jeweils wenigstens einem Teilbereich von Radlagereinheit (bspw. Anlagevorsprung) und Verbindungselement (bspw. Gewindering) eingespannt ist.

Gemäß einem weiteren Aspekt betrifft die vorliegende Erfindung ferner eine Radlageranordnung mit einer Radlagereinheit gemäß der vorliegenden Erfindung sowie einem Radträger, bevorzugt ein Radträger gemäß der vorliegenden Erfindung. Ein Verbindungselement bzw. der Radträger wiederum weist eine zur Verbindungsstruktur korrespondierenden Aufnahmestruktur auf. Die Radlagereinheit und das Verbindungselement bzw. der Radträger sind dabei über die Verbindungsstruktur und die Aufnahmestruktur mittels relativer Drehbewegung bezüglich der Rotationsachse des Radlagers kraftschlüssig und vorzugsweise lösbar miteinander verbunden, um letztlich die Radlagereinheit mit dem Radträger zu verbinden. Die Verbindung zwischen der Radlagereinheit und dem Radträger ist somit bevorzugt als kraftschlüssige und/oder formschlüssige Verbindung bereitgestellt. Insbesondere bei einer direkten Verbindung der Radlagereinheit mit dem Radträger, wenn also der Radträger das Verbindungselement bildet oder aufweist, liegt eine direkte kraftschlüssige Verbindung dieser beiden Bauteile über die Verbindungsstruktur und die Aufnahmestruktur vor.

Die Vorteile einer solchen Verbindung wurden zuvor bereits erläutert und ergeben sich - auch für den Radträger an sich - folglich in gleicher Weise; nämlich eine vereinfachte Montage und Demontage der Radlagereinheit mit Bezug auf den Radträger und somit eine Reduzierung der Montagekosten. Darüber hinaus sei erwähnt, dass durch den Wegfall der bisher bekannten Anschraubflansche und zugehörigen zahlreichen Befestigungsmittel auch auf Seiten des Radträgers die korrespondierenden verstärkten Anschraubpunkte entfallen können und somit der Radträger im Hinblick auf Gewicht und Kosten weiter optimiert bereitgestellt werden kann.

Die Aufnahmestruktur weist bevorzugt ein Gewinde, insbesondere ein Innengewinde, oder einen Teil einer Bajonettverbindung, insbesondere eine Bajonettausnehmung, wie eine Bajonettnut oder einen Bajonettschlitz, oder einen Bajonettvorsprung, auf.

Wie auch die Verbindungsstruktur bezüglich der Radlagereinheit, so kann auch das Verbindungselement bzw. die Aufnahmestruktur integral - hier integral mit dem Radträger - ausgebildet sein. Bevorzugt bildet dabei der Radträger das Verbindungselement.

Alternativ oder zusätzlich ist es auch denkbar, dass das Verbindungselement bzw. die Aufnahmestruktur als separates Aufnahmeteil vorgesehen ist. Das separate Aufnahmeteil kann dabei beispielsweise an bzw. in dem Radträger vorgesehen sein. Denkbar ist hier beispielsweise die Ausbildung des separates Aufnahmeteils in Form eines Gewindeeinsatzes, wie beispielsweise eines Drahtgewindeeinsatzes. Das separate Aufnahmeteil ist bevorzugt an bzw. in dem Radträger mittels Formschluss, Kraftschluss und/oder Stoffschluss vorgesehen. Die Verwendung eines separaten Aufnahmeteils ist insbesondere dann von Vorteil, wenn die Verbindungspartner aus unterschiedlichen Materialien - beispielsweise die Radlagereinheit aus Stahl und der Radträger aus Aluminium - bereitgestellt sind. Auf diese Weise kann auf Seiten eines beispielsweise aus Aluminium hergestellten Radträgers ein entsprechend verstärkt ausgelegtes Gewinde bereitgestellt werden. Als Gewindeeinsatz kommen hier beispielsweise Stahlgewinde, Einsatzgewinde, Helicoils und dergleichen in Frage. Insbesondere bei der integralen Ausgestaltung der Aufnahmestruktur ist es beispielsweise auch denkbar, wenigstens die Aufnahmestruktur entsprechend zu beschichten bzw. zu eloxieren (bspw. Harteloxieren), um Material-bedingte (Kontakt-)Korrosion bei der Verwendung einer Radlagereinheit aus Stahl mit einem Radträger aus Aluminium zu vermeiden.

Ist das Verbindungselement bzw. die Aufnahmestruktur als separates Aufnahmeteil vorgesehen, so kann es bspw. als Gewindering bzw. Befestigungsmutter ausgebildet sein, welche die Aufnahmestruktur aufweist. Die Befestigungsmutter kann hierzu auf einem bezüglich des Radträgers auf einer dem Radflansch abgewandten Seite vorstehenden Bereich der Verbindungsstruktur der Radlagereinheit, insbesondere des Radlageraußenringes bzw. Radlagerinnenringes, befestigt sein, um die Radlagereinheit mit dem Radträger zu verbinden. Die Radlagereinheit erstreckt sich also durch eine entsprechende Durchgangsöffnung in dem Radträger hindurch und steht wenigstens mit einem Bereich der Verbindungsstruktur aus dem Radträger bzw. einem Teil des Radträgers oder der Durchgangsöffnung in dem Radträger vor. Wenigstens erstreckt sich der Bereich der Verbindungsstruktur derart in die Durchgangsöffnung, dass sie von der gegenüberliegenden Seite des Radträgers mittels der Befestigungsmutter zugänglich und verbindbar ist. Insbesondere handelt es sich also um einen dem Radflansch abgewandten Bereich der Verbindungsstruktur der Radlagereinheit. Die Verbindungsstruktur kann dabei bevorzugt ferner einen ersten vorzugsweise radialen Strukturbereich aufweisen, welcher mit einem zweiten vorzugsweise radialen Strukturbereich des Radträgers derart zusammenwirkt, um eine relative Verdrehung von Radlagerinnenring bzw. Radlageraußenring einerseits und Radträger andererseits zu verhindern. Es ist zudem denkbar, wie zuvor bereits beschrieben, dass die Durchgangsöffnung einerseits und die damit korrespondierende Außenseite der Radlagereinheit andererseits zum Radflansch hin aufweitend konisch ausgebildet sind, um eine kraftschlüssige Verbindung zwischen dem entsprechenden Radlagerring und dem Radträger bereitzustellen. In dem letztgenannten Fall kann auf einen Anlagevorsprung, wie er zuvor beschrieben wurde, verzichtet werden. Weisen im Fall der konischen Ausgestaltung die Radlagereinheit die Verbindungsstruktur und der Radträger selbst die Aufnahmestruktur auf, so kann auf den Anlagevorsprung und das separate Verbindungselement bzw. das separate Aufnahmeteil verzichtet werden. Zum Verspannen des Radlagers kann ein axiales Radlagerverspannmittel (bspw. Kontermutter) bereitgestellt werden, was denjenigen Radlagerring axial fixiert, der nicht die Verbindungsstruktur aufweist.

Es ist bei Ausbildung des Verbindungselements als Gewindering bzw. Befestigungsmutter auch denkbar, dass der Radträger eine der Verbindungsstruktur entsprechende weitere Verbindungsstruktur aufweist. In diesem Fall kann die Befestigungsmutter eine mit beiden Verbindungsstrukturen korrespondierende und durch Drehbewegung (bezüglich der Rotationsachse des Radlagers) verbindbare Aufnahmestruktur aufweisen. Die Aufnahmestruktur übergreift dabei bevorzugt beide Verbindungstrukturen axial und umgibt diese besonders bevorzugt außen. Eine solche Ausgestaltungsform als Überwurfmutter ist insbesondere von Vorteil, wenn Radlagereinheit und Radträger aus unterschiedlichen Materialien mit unterschiedlichen Wärmeausdehnungskoeffizienten gebildet sind; beispielsweise Radlagereinheit aus Stahl und Radträger aus Aluminium. Durch die stärkere Ausdehnung von Aluminium gegenüber Stahl kann erreicht werden, dass die so gebildete Verbindung während des Betriebs noch fester wird. Insbesondere bildet, wie zuvor bereits erwähnt, die Aufnahmestruktur eine zu der Verbindungstruktur korrespondierende Struktur, um mittels relativer Drehbewegung von Radlagereinheit und Radträger oder auch eines zusätzlichen Elementes (bspw. Befestigungsmutter bzw. Überwurfmutter) bezüglich der Rotationsachse des Radlagers eine Verbindung dieser beiden Bauteile zu erhalten.

Die Radlageranordnung kann bevorzug ferner eine Sicherung aufweisen, welche derart bereitgestellt ist, dass sie ein Lösen der kraftschlüssigen Verbindung verhindert. Beispielsweise kann die Sicherung durch ein Sicherungselement, insbesondere einen Sicherungsstift oder eine Feder-Nut-Verbindung oder ein Sicherungsblech, zur formschlüssigen Verbindung von Verbindungselement (bspw. Radträger oder separates Aufnahmeteil) und Radlageraußenring bzw. Radlagerinnenring bereitgestellt sein. Es ist auch denkbar, dass ein Außenkonturbereich der Radlagereinheit, insbesondere des die Verbindungsstruktur aufweisenden Teils der Radlagereinheit, - bspw. des Anlagevorsprungs - einen Strukturbereich z.B. in Form einer Verzahnung oder Nuten aufweist. Dieser Strukturbereich wiederum kann mit einem korrespondierenden Strukturbereich eines Sicherungselementes (bspw. separates Strukturblech) zusammenwirken. Das Sicherungselement wiederum ist relativ zur Radlagereinheit fixiert - bspw. an dem Radträger - um durch Eingriff der korrespondierenden Strukturbereiche eine Verdrehsicherung bereitzustellen. Somit kann die Verdrehsicherung unabhängig von einer relativen (Dreh-)Endposition zwischen Radlagereinheit und Radträger bereitgestellt werden. Alternativ oder zusätzlich ist es denkbar, die Sicherung in Form einer kraftschlüssigen Verbindung des Radlageraußenrings bzw. Radlagerinnenringes, insbesondere des Anlagevorsprungs, mit dem Radträger bereitzustellen. Alternativ oder zusätzlich ist es ferner denkbar, eine Mutter als Radlagerverspannmittel in bereits zuvor beschriebener Weise vorzusehen, welche beispielsweise auf einem bezüglich des Radträgers auf einer dem Radflansch abgewandten Seite vorstehenden Gewindebereich der Radlagereinheit (bspw. des Radlageaußenringes bzw. Radlagerinnenringes) aufgeschraubt ist. Dieser Gewindebereich kann in einer besonders bevorzugten Ausgestaltungsform durch die als Gewinde ausgebildete Verbindungsstruktur bereitgestellt sein, so dass auf zusätzliche Gewindebereiche zur Sicherung verzichtet werden kann. Insbesondere ist der Gewindebereich bevorzugt auf einem dem Radflansch abgewandten Ende der Radlagers vorgesehen; vergleichbar dem vorgeschriebenen Bereich der Verbindungsstruktur. Als Konter-Anschlag einer Sicherung mittels Mutter kann, sofern benötigt, beispielsweise der Anlagevorsprung dienen. Da die kraftschlüssige Verbindung zwischen Radlageraußenring bzw. Radlagerinnenring einerseits und Verbindungselement bzw. Radträger andererseits im Wesentlichen keinen Antriebsdrehmomenten ausgesetzt ist, ist allenfalls eine beispielhaft vorbeschriebene einfache Sicherung gegen Lösen notwendig, um den betreffenden Radlageraußenring bzw. Radlagerinnenring nach Montage vor einem Lösen zu sichern. Insgesamt kann also eine kraftschlüssige, formschlüssige, stoffschlüssige und/oder auch eine magnetische Verbindung als Sicherung vorgesehen sein.

In einer bevorzugten Ausgestaltungsform kann die Radlagereinheit, insbesondere wenigstens der Radlagerinnenring, hohl ausgebildet sein. Beispielsweise bei Verwendung der Radlagereinheit für ein angetriebenes Rad ist es denkbar, dass die hohl ausgebildete Radlagereinheit innen eine Steckverzahnung zur drehfesten Aufnahme eines Antriebselements (bspw. Antriebswelle oder Rzeppa) aufweist. Die Radlagereinheit kann zur Anbindung von einem solchen Antriebselement (bspw. Rzeppa) und Übertragung von Drehmomenten bspw. einer Antriebseinheit eines Fahrzeugs ferner eine Stirnverzahnung insbesondere in Form einer Hirth-Verzahnung aufweisen, welche mit einer korrespondierenden Verzahnung des Antriebselementes zusammenwirkt. Die Bauteile sind dann bevorzugt mittels einer von Seiten des Radflansches die Radlagereinheit zentral durchgreifenden und in das Antriebselement eingeschraubten Verspannmittels - wie einer Dehnschraube - miteinander verbunden. Auf diese Weise kann auch die Radlagereinheit beispielsweise durch einen radialen Vorsprung des Antriebselements axial verspannt werden. Bei Ausbildung der Radlagereinheit für ein nicht-angetriebenes Rad ist es zudem denkbar, den Radlagerinnenring als Sackloch auszubilden. Durch die somit bereitgestellte integrale Ausbildung einer "Abdeckung" kann auf zusätzliche Lagerabdeckungen verzichtet werden, was wiederum die Kosten für zusätzliche Bauteile und Montage einspart.

Gemäß einem weiteren Aspekt betrifft die vorliegende Erfindung ferner ein Fahrzeug mit einer Radlageranordnung gemäß der vorliegenden Erfindung. Dabei ist die kraftschlüssige Verbindung in Richtung der Drehrichtung des Radflansches bei Vorwärtsfahrt des Fahrzeuges bereitgestellt. Auf diese Weise kann für die Hauptbetriebsart des Fahrzeugs sichergestellt werden, dass die kraftschlüssige Verbindung aufrechterhalten bleibt.

Weitere Ausgestaltungsformen und Vorteile der vorliegenden Erfindung werden im Folgenden anhand der Figuren der begleitenden Zeichnungen beschrieben. Es zeigen:
- Figur 1: mehrere Ansichten einer erfindungsgemäßen Radlageranordnung mit Radlageraußenring einer erfindungsgemäßen Radlagereinheit sowie einem erfindungsgemäßen Radträger gemäß einem ersten Ausführungsbeispiel der Erfindung (a) in perspektivischer Ansicht, (b) in Seitenansicht, (c) Detail einer seitlichen Schnittansicht entlang Linie A-A aus Figur 1d, (d) Draufsicht, und (e) in weiterer perspektivischer Ansicht,
- Figur 2: Explosionsdarstellungen der Figuren 1a bis 1e,
- Figur 3: eine perspektivische Detailansicht eines Radträgers gemäß einem zweiten Ausführungsbeispiel der Erfindung,
- Figur 4: eine perspektivische Detailansicht eines Radträgers gemäß einem dritten Ausführungsbeispiel der Erfindung,
- Figur 5: eine seitliche Detail-Schnittansicht einer erfindungsgemäßen Radlageranordnung mit Radlageraußenring einer erfindungsgemäßen Radlagereinheit und Verbindungselement sowie einem erfindungsgemäßen Radträger gemäß einem vierten Ausführungsbeispiel der Erfindung.

Die Figuren zeigen unterschiedliche Ausführungsbeispiele und Bestandteile einer Radlagereinheit gemäß der vorliegenden Erfindung. Die erfindungsgemäße Radlagereinheit weist einen Radflansch (nicht dargestellt) auf. Der Radflansch kann Befestigungsaufnahmen zur Befestigung eines Rades eines Kraftfahrzeugs aufweisen. Von dem Radflansch erstreckt sich ein Radlager axial weg. Die Radlagereinheit bzw. das Radlager weisen eine Rotationsachse A auf. Das Radlager weist einen Radlagerinnenring (nicht dargestellt) sowie einen den Radlagerinnenring außen umfangsseitig umgebenden Radlageraußenring 4 auf. Zwischen dem Radlagerinnenring und dem Radlageraußenring 4 sind Wälzkörper angeordnet. In den Figuren ist von der Radlagereinheit lediglich der Radlageraußenring 4 dargestellt. Auf die Darstellung des Radflansches und des Radlagerinnenringes, welche in der Regel zusammen die Radnabe bzw. Radnabeneinheit bilden und im Wesentlichen in bekannter Weise gemäß einer der Generationen GEN1, GEN2 oder GEN3 ausgebildet sind, wird aus Gründen der Einfachheit und Übersichtlichkeit verzichtet.

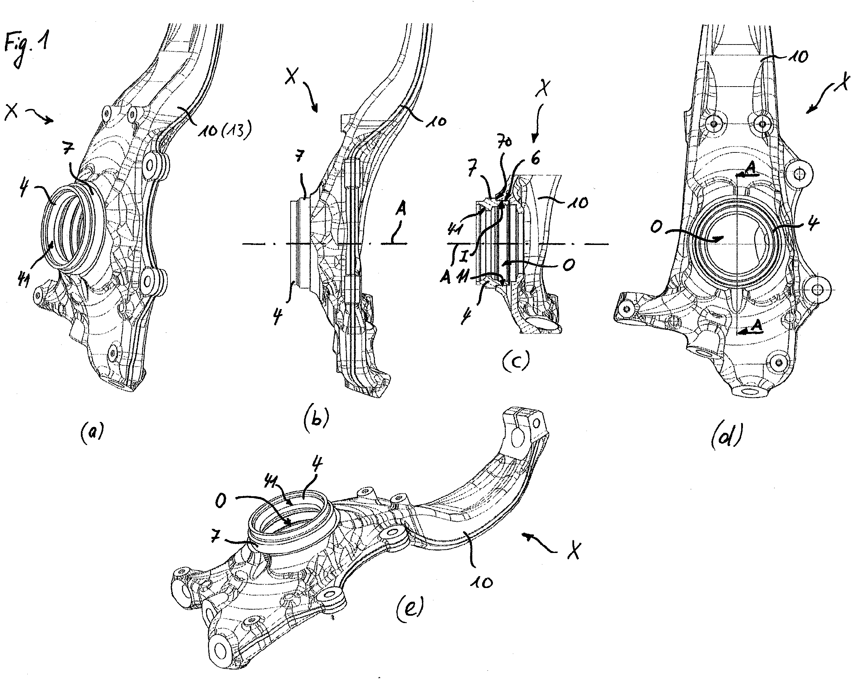

Gemäß der dargestellten Ausführungsformen der Erfindung weist der Radlageraußenring 4 auf seiner Außenseite 40 - hier auf der von dem Radlagerinnenring abgewandten Seite - umfangsseitig und bevorzugt geschlossen umfangsseitig eine Verbindungsstruktur 6 zum Verbinden der Radlagereinheit mit einem in den Figuren 1 bis 5 dargestellten Radträger 10 durch relative Drehbewegung bezüglich der Rotationsachse A auf. Grundsätzlich ist es in einer alternativen und hier nicht dargestellten Ausgestaltungsform auch denkbar, dass der Radlagerinnenring auf seiner Außenseite - also bspw. einer dem Radlageraußenring 4 zugewandten Seite - umfangsseitig die Verbindungsstruktur aufweist. Letzteres insbesondere dann, wenn die Radlagereinheit für ein nicht-angetriebenes Rad bereitgestellt ist. Die auf dem Radlagerinnenring bereitgestellte Verbindungsstruktur ist dann bevorzugt an einem dem Radflansch abgewandten Bereich bzw. Ende vorgesehen; dies bevorzugt axial außerhalb der Lagerlaufflächen 41 der Radlagereinheit bzw. des Radlagers.

Einer von Radlageraußenring 4 und Radlagerinnenring ist mit dem Radflansch verbunden (wahlweise gemäß GEN1, GEN2, GEN3) und bevorzugt integral mit diesem ausgebildet (GEN2, GEN3). Der andere von Radlageraußenring 4 (wie in Figuren 1, 2 und 5 gezeigt) und Radlagerinnenring weist die Verbindungsstruktur 6 auf, um beispielsweise mit dem Radträger 10 direkt verbunden zu werden.

In dem in Figuren 1 bis 3 und 5 dargestellten Ausführungsbeispiel weist die Verbindungsstruktur 6 ein Gewinde auf. Folglich könnte in einer bevorzugten Ausgestaltungsform ein korrespondierender Radträger 10, mit dem die Radlagereinheit zu einer Radlageranordnung X verbunden werden soll, eine korrespondierende Aufnahmestruktur 11 aufweisen, wie dies in Figuren 1 bis 3 verdeutlicht ist. Die Aufnahmestruktur 11 ist dabei bevorzugt in einer Öffnung O (bspw. einer Durchgangsöffnung) des Radträgers 10 umfangsseitig ausgebildet; insbesondere an der die Öffnung O bildenden bzw. begrenzenden Innenseite I. Die Radlagereinheit und der Radträger 10 sind dann über die Verbindungsstruktur 6 sowie die korrespondierende Aufnahmestruktur 11 direkt mittels relativer Drehbewegung bezüglich der Rotationsachse A kraftschlüssig und vorzugsweise lösbar miteinander verbunden und bilden somit die erfindungsgemäße Radlageranordnung X.

Neben der hier dargestellten Ausführungsform eines Radträgers 10, der die Aufnahmestruktur 11 (integral) aufweist, ist es grundsätzlich denkbar, dass ein Verbindungselement 13 vorgesehen ist, welches die mit der Verbindungsstruktur 6 korrespondierende Aufnahmestruktur 11 aufweist. Die Aufnahmestruktur 11 ist dabei bevorzugt in einer Öffnung O (bspw. einer Durchgangsöffnung) des Verbindungselements 13 umfangsseitig ausgebildet; insbesondere an der die Öffnung O bildenden bzw. begrenzenden Innenseite I. Die Radlagereinheit und das Verbindungselement 13 sind dann allgemein über die Verbindungsstruktur 6 und die Aufnahmestruktur 11 mittels relativer Drehbewegung bezüglich der Rotationsachse A des Radlagers kraftschlüssig und vorzugsweise lösbar miteinander verbunden/verbindbar, um die Radlagereinheit mit dem Radträger 10 zu verbinden. Die Verbindung zwischen der Radlagereinheit und dem Radträger 10 ist dabei bevorzugt als eine kraftschlüssige und/oder eine formschlüssige Verbindung gebildet. Bei der hier dargestellten direkten Verbindung zwischen diesen beiden Bauteilen durch Eindrehen wird eine kraftschlüssige Verbindung über die Verbindungsstruktur 6 und die Aufnahmestruktur 11 bereitgestellt.

Das Verbindungselement 13 bzw. die Aufnahmestruktur 11 kann integral mit dem Radträger 10 ausgebildet sein. Wie bspw. im Ausführungsbeispiel der Figuren 1, 2 und 4 dargestellt, kann dabei der Radträger 10 das Verbindungselement 13 selbst bilden. Wie im Weiteren noch beschrieben ist, kann das Verbindungselement 13 jedoch auch als separates Aufnahmeteil 14 vorgesehen sein.

Die Aufnahmestruktur 11 kann bspw. in Form eines Innengewindes bereitgestellt sein, in das die als Außengewinde bereitgestellte Verbindungsstruktur 6 der Radlagereinheit eingeschraubt ist, wie dies in Figuren 1 bis 3 und 5 dargestellt ist.

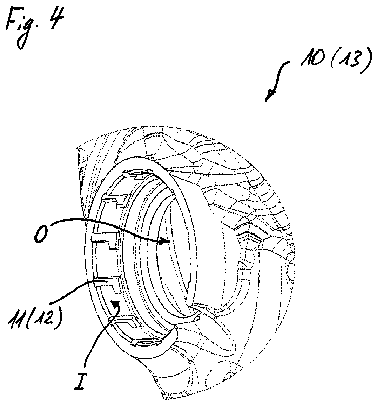

Neben der Ausbildung der Verbindungsstruktur 6 und der Aufnahmestruktur 11 in Form eines Gewindes sind auch andere Strukturen zur Bildung einer über Drehbewegung hergestellten (kraftschlüssigen) Verbindung denkbar. Beispielsweise können auch die Radlagereinheit einerseits und der Radträger 10 andererseits korrespondierende Teile einer Bajonettverbindung aufweisen. So kann beispielsweise einer von Radlagereinheit und Radträger 10 eine Bajonettausnehmung 12, wie beispielsweise eine Bajonettnut oder einen Bajonettschlitz, und der jeweils andere von Radlagereinheit und Radträger 10 einen mit der Bajonettausnehmung 12 korrespondierenden Bajonettvorsprung aufweisen. Figur 4 zeigt hierbei ein Ausführungsbeispiel eines erfindungsgemäßen Radträgers 10 mit Bajonettnut 12. Die Teile der Bajonettverbindung 12 können dabei über den Umfang gesehen gleichmäßig verteilt angeordnet sein. Es ist jedoch zur definierten (eindeutigen) Ausrichtung und Montage von Radlagereinheit und Radträger 10 auch denkbar, dass die Teile der Bajonettverbindung 12 nicht gleichmäßig über den Umfang verteilt angeordnet sind. Auch andere Ausgestaltungsformen der Verbindungsstruktur 6 und Aufnahmestruktur 11 sind denkbar.

In den hier dargestellten Ausführungsbeispielen der Figuren 1, 2 und 5 ist die Verbindungsstruktur 6 integral - hier mit dem Radlageraußenring 4 - ausgebildet. Hier ist beispielseiweise das Gewinde direkt in die Außenkontur des Radlageraußenrings 4 eingeschnitten. Der Radlageraußenring 4 weist hierzu beispielsweise wenigstens in dem die Verbindungsstruktur 6 aufweisenden Bereich eine im Wesentlichen zylindrische Außenkontur auf, um die Verbindungsstruktur 6 einfach und sicher bereitstellen zu können. In Ausgestaltung eines Gewindes ist die Verbindungsstruktur 6 bevorzugt geschlossen umfangsseitig vorgesehen. Es ist jedoch auch denkbar, aus gewichtssparenden Gründen axiale Materialreduzierungen im Außenumfang des Radlageraußenringes 4 vorzusehen, welche bevorzugt über den Umfang gleichmäßig verteilt bereitgestellt sind, wobei die Verbindungsstrukturabschnitte dann ebenso bevorzugt gleichmäßig über den Umfang verteilt bereitgestellt ist.

Neben der integralen Ausgestaltung vergleichbar der GEN3 ist es auch denkbar, die Verbindungsstruktur 6 als separates Verbindungsteil - hier auf der Außenseite 40 des Radlageraußenrings 4 - bereitzustellen. Beispielsweise könnte eine Hülse mit außenumfangsseitiger Verbindungsstruktur 6 bereitgestellt werden, wobei dann das separate Verbindungsteil - beispielsweise die Hülse - auf den Radlageraußenring 4 mittels Formschluss, Kraftschluss und/oder Stoffschluss vorgesehen ist. Dies entspräche einer Ausführungsvariante gemäß GEN1 bzw. GEN2.

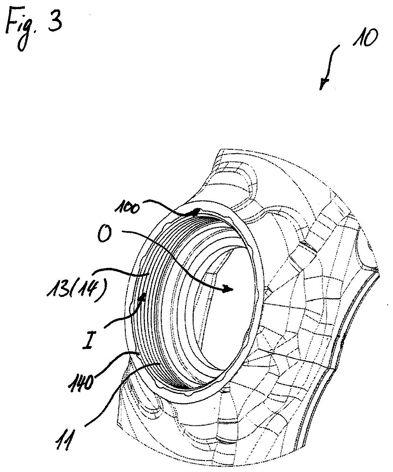

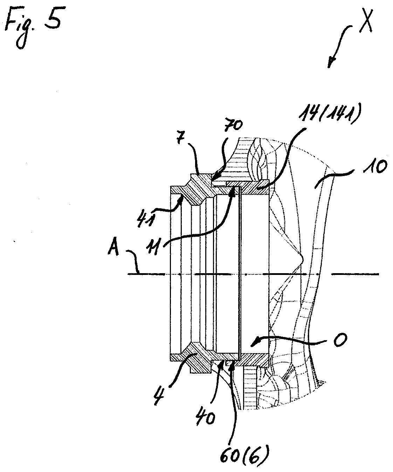

In gleicher Weise kann auch das Verbindungselement 13 bzw. die Aufnahmestruktur 11 wahlweise integral - insbesondere mit dem Radträger 10, wie zuvor beschrieben - ausgebildet (vgl. Figuren 1, 2 und 4) oder als separates Aufnahmeteil 14 vorgesehen sein (vgl. Figuren 3 und 5). So kann das separate Aufnahmeteil 14 beispielsweise an bzw. in dem Radträger 10 vorgesehen sein. In letztgenanntem Fall könnte das separate Aufnahmeteil 14 beispielsweise als Gewindeeinsatz (beispielsweise Drahtgewindeeinsatz) bereitgestellt werden, wie dies in Figur 3 gezeigt ist. Auch das separate Aufnahmeteil 14 kann an bzw. in dem Radträger 10 mittels Formschluss, Kraftschluss und/oder Stoffschluss vorgesehen sein. Beispielsweise zeigt die Ausführungsform der Figur 3, dass das separate Aufnahmeteil 14 umfangsseitige (axiale) Strukturelemente 140 aufweist, welche mit korrespondierenden (axialen) Strukturelementen 100 des Radträgers 10 zusammenwirken, um eine formschlüssige und bevorzugt ferner kraftschlüssige Verbindung zu bilden.

Figur 5 zeigt eine weitere Ausführungsform eines separaten Aufnahmeteils 14. Dieses ist als Befestigungsmutter 141 ausgebildet, welche die Aufnahmestruktur 11 aufweist. In dem dargestellten Ausführungsbeispiel steht ein Bereich 60 der Verbindungsstruktur 6 der Radlagereinheit (hier des Radlageraußenringes 4) auf einer dem Radflansch abgewandten Seite des Radlagers bezüglich des Radträgers 10 vor. Es handelt sich also bevorzugt um einen dem Radflansch abgewandten Bereich 60 der Verbindungsstruktur 6. Wie dargestellt, kann dabei dieser vorstehende - also exponierte - Bereich 60 räumlich innerhalb der Außenkontur des Radträgers 10 vorgesehen sein, so dass die Dimensionen des Radträgers 10 durch Bereitstellung des separaten Aufnahmeteils 14 nicht beeinträchtigt, also vergrößert sind. Das als Befestigungsmutter 141 ausgebildete separate Aufnahmeteil 14 ist hier auf diesem vorstehenden Bereich 60 befestigt - hier aufgeschraubt durch Drehung um die Rotationsachse A - um die Radlagereinheit mit dem Radträger 10 zu verbinden. Durch diese kraftschlüssige Verbindung von Befestigungsmutter 141 und Radlagereinheit wird die Radlagereinheit mittels Kraft- und Formschluss mit dem Radträger 10 befestigt, indem der Radträger 10 zwischen Befestigungsmutter 141 einerseits und Radlageraußenring 4 - hier bspw. über einen Anlagevorsprung 7 (welcher im Weiteren noch näher beschrieben wird) - andererseits eingespannt wird.

In dem in Figur 5 dargestellten Ausführungsbeispiel greifen sowohl der Radlageraußenring 4 als auch das separate Aufnahmeteil 14 in die (Durchgangs-)Öffnung O des Radträgers 10 ein und übergreifen sich dort im Bereich von Verbindungsstruktur 40 und Aufnahmestruktur 11 axial. Es ist jedoch auch denkbar, dass der Radlageraußenring 4 die Öffnung Ovollständig durchgreift und mit seinem vorstehenden Bereich 60 an der gegenüberliegenden Seite des Radträgers 10 nach außen vorsteht, wo das separate Aufnahmeteil 40 bspw. in Form einer Kontermutter aufgeschraubt ist. Dies wahlweise in Kombination mit einer Aufnahmestruktur 11 ebenso auf der Innenseite I der Öffnung O des Radträgers 10. Ist auf der Innenseite I des Radträgers keine Aufnahmestruktur 11 vorgesehen, können der Radlageraußenring 4 sowie die Öffnung O eine in Seitenansicht im Querschnitt korrespondierende konische Kontur aufweisen. In diesem Fall kann auf den Anlagevorsprung 7 verzichtet werden. Mittels des separaten Aufnahmeteils 14 kann dann der wenigstens außen umfangsseitig konische Radlageraußenring 4 in die korrespondierende konische Öffnung O eingespannt und somit wahlweise axial vorgespannt werden. Alternativ hierzu ist es auch denkbar, ein separates Verbindungsteil mit radialer Verbindungsstruktur 40 axial auf der aufgeweiteten - hier also den Radflansch aufweisenden - Seite der konischen Kontur vorzusehen, um über seine Verbindungsstruktur 40 in axiale Anlage mit dem entsprechenden (Rad-)Lagerring 4 gebracht zu werden. Der entsprechend andere (Rad-)Lagerring ist dann bevorzugt mittels zentraler Kontermutter gekontert.

Die Verbindungsstruktur 6 kann bevorzugt ferner einen ersten vorzugsweise radialen Strukturbereich aufweisen, welcher mit einem zweiten vorzugsweise radialen Strukturbereich des Radträgers 10 derart zusammenwirkt, um eine relative Verdrehung von entsprechendem Radlagerring (hier Radlageraußenring 4) und Radträger 10 zu verhindern. Die Strukturbereiche können beispielsweise als eine Steckverzahnung ausgebildet sein.

In einer hier nicht dargestellten Ausführungsform ist es auch denkbar, dass der Radträger 10 eine der Verbindungsstruktur 6 entsprechende weitere Verbindungsstruktur aufweist. Diese kann beispielsweise als an den Radträger 10 angeflanschte bzw. sich von diesem weg erstreckende Hülse mit entsprechender Verbindungsstruktur bereitgestellt sein. In diesem Fall weist die Befestigungsmutter eine mit den Verbindungsstrukturen 6 korrespondierende und durch Drehbewegung (um die Rotationsachse A) verbindbare Aufnahmestruktur 11 auf. Im verbundenen Zustand übergreift dann die Aufnahmestruktur 11 beide Verbindungstrukturen 6 axial, beispielsweise indem sie bzw. die Befestigungsmutter die Verbindungsstrukturen in Form einer Überwurfmutter außen umgibt.

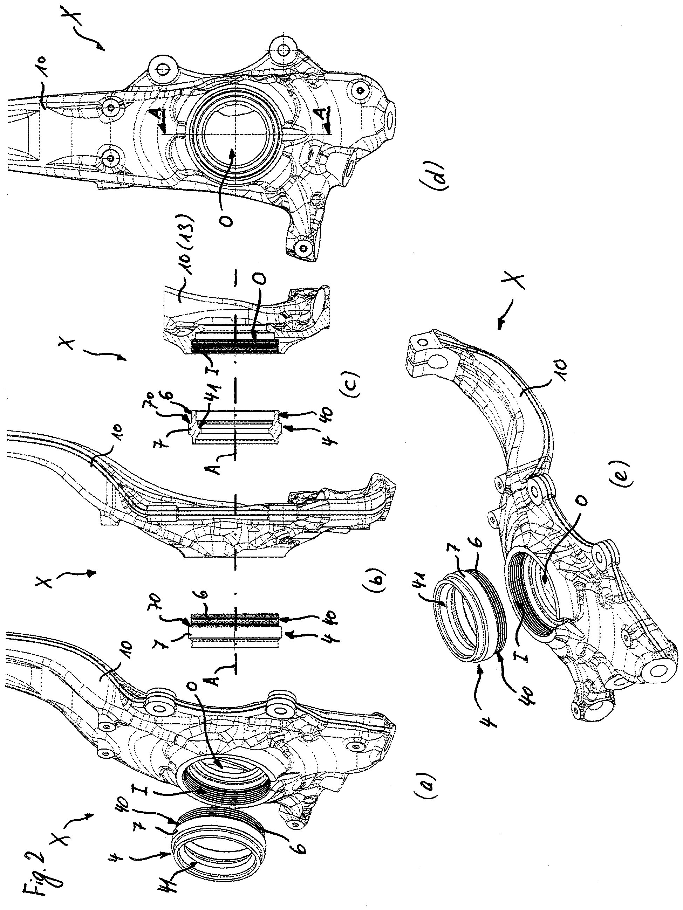

Der Radlageraußenring 4 kann zwischen der Verbindungsstruktur 6 einerseits und dem Radflansch andererseits einen umfangsseitigen (vorzugsweise geschlossen umfangsseitigen) und vorzugsweise mit dem Radlageraußenring 4 integral ausgebildeten (radialen) Anlagevorsprung 7 aufweisen, welcher zuvor bereits mit Verweis auf Figur 5 beschrieben wurde und auch in den Figuren 1 und 2 gezeigt ist. Der Anlagevorsprung 7 kann dabei bevorzugt eine der Verbindungsstruktur 6 zugewandte Planfläche 70 aufweisen. Dieser Anlagevorsprung 7 insbesondere mit entsprechender Planfläche 70 kann dann als Anschlag für den Radträger 10 beim Verbinden bzw. Eindrehen der Radlagereinheit mit bzw. in den Radträger 10 dienen. Durch entsprechendes Anziehen der Radlagereinheit (hier des Radlageraußenringes 4) bezüglich des Verbindungselements 14 (bspw. Radträger 10 selbst oder separates Aufnahmeteil 13) kann auf diese Weise auch eine reibschlüssige Sicherung der Radlagereinheit bezüglich des Radträgers 10 bereitgestellt werden. Insgesamt ist es denkbar, dass die Radlageranordnung X diese oder auch eine andere Sicherung aufweist, welche derart bereitgestellt ist, dass sie ein Lösen der kraftschlüssigen Verbindung verhindert. So kann die Sicherung beispielsweise als eine kraftschlüssige Verbindung des Radlager(außen)rings 4, insbesondere des Anlagevorsprungs 7, mit dem Radträger 10 ausgebildet sein. Alternativ oder zusätzlich ist es auch denkbar, ein Sicherungselement, insbesondere einen Sicherungsstift, zur formschlüssigen Verbindung von Verbindungselement 13 (bspw. Radträger 10 oder separatem Aufnahmeteil 13) und Radlager(außen)ring 4 vorzusehen. Alternativ oder zusätzlich kann ebenso eine (zuvor bereits wahlweise als separates Aufnahmeteil 14 beschriebene) Mutter - ähnlich der Befestigungsmutter 141 - bereitgestellt werden, welche auf einem bezüglich des Radträgers 10 auf einer dem Radflansch abgewandten Seite vorstehenden Gewindebereich 60 der Radlagereinheit - hier des Radlageraußenrings 4 - und insbesondere der Verbindungsstruktur 6 aufgeschraubt ist. Für den Gewindebereich 60 gilt dasselbe wie für den vorbeschriebenen Bereich 60. Er sollte bevorzugt auf einem dem Radflansch abgewandten Ende des Radlagers vorgesehen sein. Unter "vorstehen" ist zu verstehen, dass er wenigstens aus einem Teil des Radträgers aus der Durchgangsöffnung Ovorsteht. Der Gewindebereich 60 kann dabei vollständig von der Außenkontur des Radträgers (hier in Seitenansicht gesehen) räumlich umgeben sein.

Gemäß einer bevorzugten Ausgestaltungsform kann die Radlagereinheit und insbesondere der Radlageraußenring 4 Außenkonturbereiche (nicht dargestellt) zur Aufnahme eines Werkzeugs zur Erzeugung einer Drehbewegung des Radlageraußenrings 4 relativ zum Verbindungselement 13 (bspw. zum Radträger 10 bzw. zum separaten Aufnahmeteil 13) bezüglich der Rotationsachse A aufweisen, um eben die Verbindung der Radlagereinheit und insbesondere die kraftschlüssige Verbindung zwischen Radlagereinheit und Verbindungselement 13 sicher und einfach herstellen zu können. Beispielsweise kann es sich hierbei um Nute und dergleichen zur Aufnahme eines Hakenschlüssels handeln. Auch andere formschlüssige und/oder reibschlüssige Anzugs- bzw. Drehbewegungsmöglichkeiten sind denkbar. Beispielsweise könnte auch ein Rändel oder dergleichen (beispielsweise über einen zusätzlich an der Radlagereinheit angeformten Flansch) bereitgestellt werden. Die Außenkonturbereiche sind dabei bevorzugt zwischen der Verbindungsstruktur 6 und dem Radflansch bereitgestellt. Beispielsweise ist es denkbar, die Außenkonturbereiche in dem Anlagevorsprung 7 vorzusehen. Auf diese Weise sind die Anlagevorsprünge sicher zugänglich und eine Befestigung der Radlagereinheit beispielsweise mit einem Radträger 10 ist einfach möglich.

Eine äußere Lagerlauffläche 41 für die Wälzkörper ist bevorzugt auf der radialen Innenseite des Radlageraußenrings 4 bereitgestellt. Dies kann, wie in Figuren 1, 2 und 5 dargestellt, vorzugsweise durch integrale Ausbildung der Fall sein (gemäß GEN3). Es ist jedoch auch denkbar, die äußere Lagerlauffläche 41 mittels eines in dem Radlageraußenring 4 innen umfangsseitig vorgesehenen separaten Lageraußenringes bereitzustellen (gemäß GEN1 bzw. GEN2). Der den Lageraußenring außen umgebende Bereich kann dabei bevorzugt als Verbindungsteil mit der Verbindungsstruktur 40 bereitgestellt sein. Mittels eines radialen Vorsprungs kann der Lageraußenring dabei axial fixiert bzw. vorgespannt werden. Hierzu wird der (Rad-)Lagerinnenring bevorzugt mittels zentraler Kontermutter gekontert. Des Weiteren kann das Verbindungsteil wahlweise den vorbeschriebenen Anlagevorsprung 7 aufweisen. In gleicher Weise kann eine innere Lagerlauffläche für die Wälzkörper auf der radialen Außenseite des Radlagerinnenrings bereitgestellt sein. Dies integral (gemäß GEN2 bzw. GEN3) oder mittels eines auf dem Radlagerinnenring außen umfangsseitig vorgesehenen, separaten Lagerinnenrings (GEN1). Bei separater Bereitstellung von Lageraußenring bzw. Lagerinnenring können diese beispielsweise mittels Formschluss, Kraftschluss und/oder Stoffschluss an dem entsprechenden Radlagerring vorgesehen sein.

Die Radlagereinheit und insbesondere wenigstens der Radlagerinnenring kann/können hohl ausgebildet sein. Bevorzugt weist die Radlagereinheit dabei innen eine Steckverzahnung zur drehfesten Aufnahme eines Antriebselements, wie beispielsweise einer Antriebswelle oder eines Rzeppas, auf. Alternativ ist es denkbar, dass die Radlagereinheit zur Anbindung von dem Antriebselement eine Stirnverzahnung, genauer eine Hirth-Verzahnung aufweist, welche mit einer korrespondierenden Verzahnung des Antriebselementes zusammenwirkt. Die Bauteile sind dann in der Regel mittels einer von Seiten des Radflansches die Radlagereinheit zentral durchgreifenden und in das Antriebselement eingeschraubten Dehnschraube miteinander verbunden. Auf diese Weise wird auch die Radlagereinheit axial verspannt. Dies kann beispielsweise durch einen radialen Vorsprung des Antriebselements zur axialen Verspannung des Radlagers ermöglicht werden.

Der Radträger 10 mit Aufnahmestruktur 11 (mit allen (optionalen) Merkmalen, wie sie hierin beschrieben sind) zum bevorzugt kraftschlüssigen Verbinden einer Radlagereinheit, vorzugsweise einer Radlagereinheit gemäß der Erfindung, mit dem Radträger 10 durch relative Drehbewegung bezüglich der Rotationsachse A des Radlagers ist eigenständiger Bestandteil dieser Erfindung. Dasselbe gilt in für die erfindungsgemäße Radlageranordnung X.

Gemäß einem Aspekt ist die vorliegende Erfindung ferner auf ein Fahrzeug gerichtet, welches die erfindungsgemäße Radlageranordnung X mit Radlagereinheit und Radträger 10 aufweist. Dabei ist bevorzugt die kraftschlüssige Verbindung in Richtung der Drehrichtung des Radflansches bei Vorwärtsfahrt des Fahrzeugs bereitgestellt, so dass ein Lösen der kraftschlüssigen Verbindung in der Hauptbetriebsart des Fahrzeugs sicher vermieden werden kann.

Die vorliegende Erfindung ist auf das vorhergehende Ausführungsbeispiel nicht beschränkt, sofern sie vom Gegenstand der folgenden Ansprüche umfasst ist. Insbesondere ist die vorliegende Erfindung nicht auf eine konkrete Ausgestaltung der Verbindungsstruktur beschränkt, sofern mit ihr eine kraftschlüssige Verbindung durch relative Drehbewegung zu dem Verbindungselement (beispielsweise Radträger oder separates Aufnahmeteil) ermöglicht wird, um die Radlagereinheit mit einem Radträger 10 zu verbinden. Dasselbe gilt folglich auch für die mit der Verbindungsstruktur 6 korrespondierende Aufnahmestruktur 11. Neben der hier dargestellten Alternative, die Verbindungsstruktur 6 auf dem Radlageraußenring 4 vorzusehen, ist ebenso eine Verbindungsstruktur 6 denkbar, welche entsprechend auf dem Radlagerinnenring vorgesehen ist. Insbesondere ist die vorliegende Erfindung auch nicht auf eine bestimmte Art von Lagerung beschränkt. Auch die Materialien der einzelnen Bauteile sind beliebig wählbar.

## Patentansprüche

1. Radlagereinheit aufweisend:
einen Radflansch, und
ein sich vom Radflansch weg erstreckendes Radlager mit einer Rotationsachse (A) sowie mit einem Radlagerinnenring, einem den Radlagerinnenring außen umfangsseitig umgebenden Radlageraußenring (4), und zwischen dem Radlagerinnenring und dem Radlageraußenring (4) angeordnete Wälzkörper, wobei der Radlageraußenring (4) oder der Radlagerinnenring auf seiner Außenseite (40) umfangsseitig eine Verbindungsstruktur (6) zum Verbinden der Radlagereinheit mit einem Radträger (10) durch relative Drehbewegung bezüglich der Rotationsachse (A) aufweist.

2. Radlagereinheit nach Anspruch 1, wobei die Verbindungsstruktur (6) ein Gewinde oder einen Teil einer Bajonettverbindung, insbesondere eine Bajonettausnehmung, wie eine Bajonettnut oder einen Bajonettschlitz, oder einen Bajonettvorsprung, aufweist.

3. Radlagereinheit nach Anspruch 1 oder 2,
wobei die Verbindungsstruktur (6) integral ausgebildet ist, oder
wobei die Verbindungsstruktur (6) mittels eines separaten Verbindungsteils, insbesondere auf der Außenseite (40) des Radlageraußenringes (4) bzw. des Radlagerinnenrings, bereitgestellt ist, beispielsweise als Hülse mit außen umfangsseitiger Verbindungsstruktur (6), und wobei das separate Verbindungsteil mittels Formschluss, Kraftschluss und/oder Stoffschluss vorgesehen ist.

4. Radlagereinheit nach einem der vorhergehenden Ansprüche, wobei der Radlageraußenring (4) bzw. der Radlagerinnenring zwischen der Verbindungsstruktur (6) und dem Radflansch einen umfangsseitigen und vorzugsweise integral ausgebildeten Anlagevorsprung (7) aufweist, wobei der Anlagevorsprung (7) vorzugsweise eine der Verbindungsstruktur (6) zugewandte Planfläche (70) aufweist, und/oder
wobei die Radlagereinheit, insbesondere der Radlageraußenring (4) bzw. der Radlagerinnenring, eine im Wesentlichen zylindrische Außenkontur wenigstens im die Verbindungsstruktur (6) aufweisenden Bereich aufweist.

5. Radlagereinheit nach einem der vorhergehenden Ansprüche, wobei die Radlagereinheit, insbesondere der Radlageraußenring (4) bzw. der Radlagerinnenring, Außenkonturbereiche zur Aufnahme eines Werkzeuges zur Erzeugung einer Drehbewegung des Radlageraußenringes (4) bzw. Radlagerinnenringes aufweist, um die Verbindung der Radlagereinheit herstellen zu können, wobei die Außenkonturbereiche bevorzugt zwischen der Verbindungsstruktur (6) und dem Radflansch, weiter bevorzugt in dem Anlagevorsprung (7), bereitgestellt sind.

6. Radlagereinheit nach einem der vorhergehenden Ansprüche,
wobei eine äußere Lagerlauffläche (41) auf der radialen Innenseite des Radlageraußenringes (4) bereitgestellt ist, vorzugsweise integral oder mittels eines in dem Radlageraußenring (4) innen umfangsseitig vorgesehenen Lageraußenringes, und
wobei eine innere Lagerlauffläche auf der radialen Außenseite des Radlagerinnenringes bereitgestellt ist, vorzugsweise integral oder mittels eines auf dem Radlagerinnenring außen umfangsseitig vorgesehenen Lagerinnenringes.

7. Radträger (10), aufweisend eine Aufnahmestruktur zum bevorzugt kraftschlüssigen Verbinden einer Radlagereinheit, vorzugsweise einer Radlagereinheit gemäß einem der vorhergehenden Ansprüche, mit dem Radträger (10) durch relative Drehbewegung bezüglich einer Rotationsachse (A) des Radlagers.

8. Radlageranordnung (X) aufweisend:
eine Radlagereinheit (1) gemäß einem der Ansprüche 1 bis 6, und
einen Radträger, vorzugsweise ein Radträger (10) gemäß Anspruch 7, wobei ein Verbindungselement (13) eine zur Verbindungsstruktur (6) korrespondierende Aufnahmestruktur (11) aufweist, und
wobei die Radlagereinheit und das Verbindungselement (13) über die Verbindungsstruktur (6) und die Aufnahmestruktur (11) mittels relativer Drehbewegung bezüglich der Rotationsachse (A) des Radlagers kraftschlüssig miteinander und vorzugsweise lösbar verbunden sind, um die Radlagereinheit mit dem Radträger (10) zu verbinden.

9. Radlageranordnung (X) nach Anspruch 8, wobei die Verbindung zwischen der Radlagereinheit und dem Radträger (10) eine kraftschlüssige und/oder eine formschlüssige Verbindung ist, vorzugsweise eine direkte kraftschlüssige Verbindung über die Verbindungsstruktur (6) und die Aufnahmestruktur (11).

10. Radlageranordnung (X) nach Anspruch 8 oder 9, wobei die Aufnahmestruktur (11) ein Gewinde, insbesondere ein Innengewinde, oder einen Teil einer Bajonettverbindung, insbesondere eine Bajonettausnehmung, wie eine Bajonettnut oder einen Bajonettschlitz, oder einen Bajonettvorsprung, aufweist.

11. Radlageranordnung (X) nach einem der Ansprüche 8 bis 10, wobei das Verbindungselement (13) integral mit dem Radträger (10) ausgebildet ist, vorzugsweise der Radträger (10) das Verbindungselement (13) bildet.

12. Radlageranordnung (X) nach einem der Ansprüche 8 bis 11, wobei das Verbindungselement (13) als separates Aufnahmeteil (14) vorgesehen ist, wobei das separate Aufnahmeteil (14) bevorzugt
• an bzw. in dem Radträger (10) vorgesehen ist, vorzugsweis als Gewindeeinsatz wie beispielsweise als Drahtgewindeeinsatz, und wobei das separate Aufnahmeteil (14) an bzw. in dem Radträger (10) mittels Formschluss, Kraftschluss und/oder Stoffschluss vorgesehen ist, und/oder
• als Befestigungsmutter (141) ausgebildet ist, welche die Aufnahmestruktur (11) aufweist, wobei
∘ die Befestigungsmutter (141) auf einem dem Radflansch abgewandten Bereich (60) der Verbindungsstruktur (6) der Radlagereinheit, insbesondere des Radlageraußenringes bzw. Radlagerinnenringes (4), befestigt ist, um die Radlagereinheit mit dem Radträger (10) zu verbinden, wobei die Verbindungsstruktur (6) bevorzugt ferner einen ersten vorzugsweise radialen Strukturbereich aufweist, welcher mit einem zweiten vorzugsweise radialen Strukturbereich des Radträgers (10) derart zusammenwirkt, um eine relative Verdrehung von Radlagerinnenring bzw. Radlageraußenring (4) einerseits und Radträger (10) andererseits zu verhindern, oder
∘ der Radträger (10) eine der Verbindungsstruktur (6) entsprechende weitere Verbindungsstruktur aufweist, und wobei die Befestigungsmutter (141) eine mit den Verbindungsstrukturen (6) korrespondierende und durch Drehbewegung verbindbare Aufnahmestruktur (11) aufweist, wobei die Aufnahmestruktur (11) beide Verbindungstrukturen (6) axial übergreift, vorzugsweise außen umgibt.

13. Radlageranordnung (X) nach einem der Ansprüche 8 bis 12, ferner aufweisend eine Sicherung, welche derart bereitgestellt ist, dass sie ein Lösen der kraftschlüssigen Verbindung verhindert, wobei die Sicherung vorzugsweise bereitgestellt ist durch:
• ein Sicherungselement, insbesondere einen Sicherungsstift, zur formschlüssigen Verbindung von Verbindungselement (13) und Radlageraußenring (4) bzw. von Verbindungselement (13) und Radlagerinnenring, und/oder
• eine kraftschlüssige Verbindung des Radlageraußenringes (4) bzw. Radlagerinnenringes, insbesondere des Anlagevorsprungs (7), mit dem Radträger (10), und/oder
• eine Mutter, welche auf einen Gewindebereich (60) der Radlagereinheit, insbesondere des Radlageraußenringes (4) bzw. Radlagerinnenringes wie bevorzugt der Verbindungsstruktur (6), welcher bevorzugt auf einem dem Radflansch abgewandten Ende des Radlagers vorgesehen ist, aufgeschraubt ist.

14. Radlageranordnung nach einem der Ansprüche 8 bis 13, wobei die Radlagereinheit, insbesondere wenigstens der Radlagerinnenring, hohl ausgebildet ist und vorzugsweise innen eine Steckverzahnung zur drehfesten Aufnahme eines Antriebselements aufweist.

15. Fahrzeug aufweisend eine Radlageranordnung gemäß einem der Ansprüche 8 bis 14, wobei die kraftschlüssige Verbindung in Richtung der Drehrichtung des Radflansches bei Vorwärtsfahrt des Fahrzeugs bereitgestellt ist.
